# FASCICULE DE BREVET EUROPEEN

(11) **EP 1 781 959 B1**
(45) Date de publication et mention de la délivrance du brevet: **30.05.2012**
(21) Numéro de dépôt: 05798352.0
(22) Date de dépôt: 26.08.2005
(51) Int. Cl.: F16D 66/02, F16D 55/36

(54) **FREIN POUR ROUE AVEC CAPTEUR D'USURE**
RADBREMSE MIT EINEM VERSCHLEISSSENSOR
WHEEL BRAKE COMPRISING A WEAR SENSOR

(30) Priorité: 26.08.2004 FR 0409119
(43) Date de publication de la demande: 09.05.2007
(73) Titulaire: MESSIER-BUGATTI, 78140 Vélizy Villacoublay (FR)
(72) Inventeur: PRADIER, Jean-Clair, F-78800 Houilles (FR); BUSSE-GRAWITZ, Max Erick, CH-6055 ALPNACH DORF (CH)
(74) Mandataire: Blot, Philippe Robert Emile
(86) Numéro de dépôt international: PCT/FR2005/002158
(87) Numéro de publication internationale: WO 2006/024803

(56) Documents cités:
- US-A- 3 808 593
- US-A- 5 632 359
- US-A1- 2003 029 680
- US-A1- 2004 075 450

## Description

La présente invention concerne un frein pour une roue de véhicule montée rotative par rapport à un support de roue, du type comportant un châssis destiné à être solidaire du support de roue et des organes de friction fixes et mobiles complémentaires, les organes de friction mobiles étant destinés à être solidaires de la roue et les organes de friction fixes étant solidaires en rotation du châssis, le frein comportant au moins un actionneur porté par le châssis et adapté pour presser les organes de friction complémentaires les uns contre les autres suivant l'axe de la roue, ainsi qu'un dispositif de mesure d'un paramètre représentatif de la capacité énergétique du frein.

Les véhicules, et notamment les avions, sont équipés des dispositifs de freinage par friction. Au fur à mesure de leur utilisation, les organes de friction s'usent. Afin de gérer au mieux le remplacement des organes de friction, il est connu de suivre leur usure au cours du temps.

Les freins d'avion sont équipés d'un empilement de disques reliés alternativement à la roue et au support de roue. Lors du freinage, ces disques sont pressés les uns contre les autres par des actionneurs.

Pour suivre l'usure des disques de frein, le disque extrême de l'empilement est lié à une tige dite d'usure qui fait saillie parallèlement à l'axe de la roue. Cette tige est engagée au travers d'un orifice de référence porté par le support de roue, et plus précisément ménagé au travers du châssis du frein. La distance séparant l'extrémité de la tige de l'orifice au travers duquel la tige est engagée est représentative de l'usure des disques. Cette distance est classiquement mesurée manuellement par un opérateur qui détermine, par exemple à l'aide d'une règle la longueur de la tige d'usure.

Le document US 6,659,233 décrit la possibilité de placer sur la tige d'usure, un codeur optique constitué d'un ensemble de graduation porté par la tige d'usure et d'un encodeur optique propre à déterminer le nombre de graduations passant devant l'encodeur.

Un tel capteur optique est très délicat à mettre en oeuvre dans l'environnement très contraint d'un frein, du fait des vibrations importantes, des très forts dégagements de chaleur et de la poussière de carbone dégagée par les disques.

Le document US 2003/029680 A1 montre un frein pour une roue d'aprés le préambule de la revendication 1.

L'invention a pour but de proposer un frein permettant une mesure de l'usure qui soit simple et fiable malgré les conditions sévères de fonctionnement.

A cet effet, l'invention a pour objet un frein pour une roue montée rotative par rapport à un support de roue du type précité, caractérisé en ce que le dispositif de mesure comporte un capteur capacitif et une unité de traitement d'information reliée au capteur capacitif, lequel capteur capacitif comprend deux armatures de mesure disposées en regard et portées par le châssis et un écran diélectrique porté par un organe de friction, lequel écran mobile sous l'action du ou de chaque actionneur est coulissant entre les deux armatures lors du serrage des organes de friction pour modifier la capacité du condensateur formé des deux armatures de mesure.

Suivant des modes particuliers de réalisation, le frein comporte l'une ou plusieurs des caractéristiques suivantes :
- les deux armatures sont formées par des plaques cylindriques de section courbe généralement symétriques l'une de l'autre par rapport à un axe médian suivant lequel l'écran diélectrique est déplaçable ;
- les deux armatures sont formées par des tiges généralement symétriques l'une de l'autre par rapport à un axe médian suivant lequel l'écran diélectrique est déplaçable ;
- l'une des armatures forme un boîtier délimitant une cavité dans laquelle est reçu au moins partiellement l'écran diélectrique et l'autre armature ;
- les armatures s'étendent généralement parallèlement à la direction de serrage des organes de friction ;
- l'écran diélectrique a généralement la forme d'une tige s'étendant suivant l'axe de serrage des organes de friction ;
- un insert isolant est interposé entre les deux armatures et l'écran diélectrique pour le guidage mécanique de l'écran diélectrique ;
- frein d'atterrissage d'avion comportant un support de roue, une roue et un frein tel que défini précédemment.

L'invention sera mieux comprise à la lecture de la description qui va suivre, donnée uniquement à titre d'exemple et faite en se référant aux dessins, sur lesquels :
- la figure 1 est une vue en coupe transversale d'une roue d'avion équipé d'un dispositif de freinage selon l'invention.
- la figure 2 est une vue en section d'un premier mode de réalisation d'un capteur capacitif de l'invention ;
- les figures 3 et 4 sont des vues en coupe longitudinale du capteur capacitif selon l'invention illustrées dans des positions distinctes ;
- la figure 5 est une vue identique à celle de la figure 2 d'une variante de réalisation du capteur capacitif ; et
- les figures 6 et 7 sont des vues analogues à celle à la figure 2 de variante de réalisation du capteur.

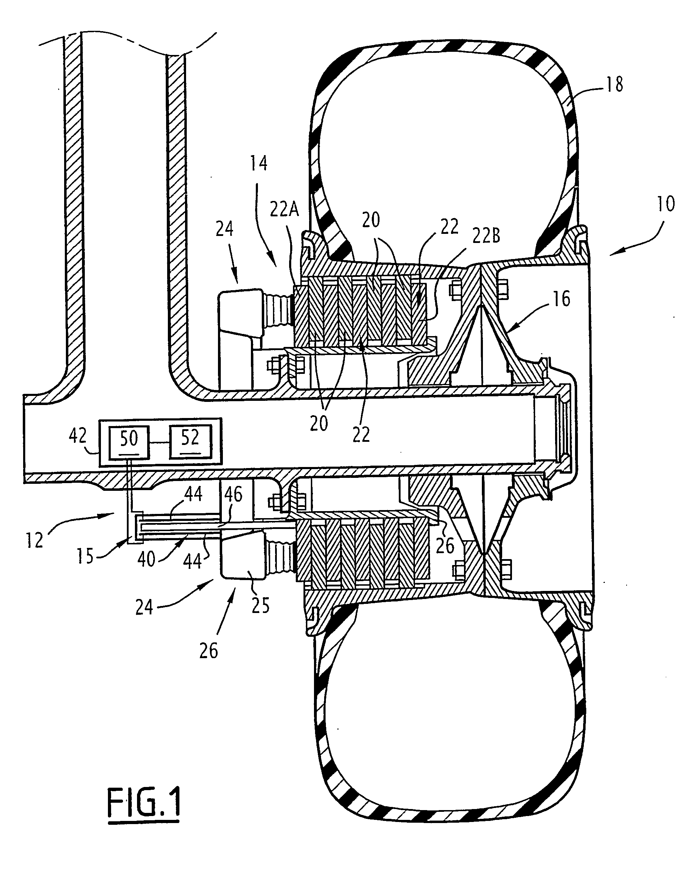

Sur la figure 1 est représentée une roue d'avion 10 montée rotative autour d'un support de roue 12 constituant une fusée. La roue 10 est équipée d'un frein 14 équipé d'un dispositif de mesure d'usure 15.

La roue 12 présente une jante 16 sur laquelle un pneumatique 18 est monté.

Comme connu en soi, le frein 14 comporte un empilement d'organes de friction complémentaires portés par le support de roue 12 et par la jante 16.

Ces organes de friction complémentaires comportent un ensemble de disques mobiles 20 solidaires en rotation de la jante 16. Ces disques sont disposés de telle sorte que leur axe s'étende suivant l'axe de rotation de la roue. Leur solidarisation en rotation avec la roue est réalisée au moyen d'encoches ménagées sur la jante 16. Les disques 20 sont libres de se déplacer en translation par rapport à la jante suivant l'axe de la roue sur une plage de déplacement prédéfinie.

En outre, les organes de friction comportent des disques complémentaires fixes 22 interposés entre les disques 20. Les disques 22 sont immobilisés en rotation par rapport au support de roue 12 et sont déplaçables en translation par rapport à ce support suivant l'axe de rotation de la roue.

Les disques 20 et 22 sont intercalés. Lors des phases de freinage, ils sont appliqués et pressés les uns contre les autres suivant la direction de l'axe de rotation de la roue par un ensemble d'actionneurs 24 dont la partie fixe est solidaire d'un châssis annulaire 25 du frein. Ce châssis 25 est solidaire axialement et en rotation du support de roue 12.

La partie mobile des actionneurs est adaptée pour s'appliquer sur un disque d'extrémité noté 22A de l'empilement de disques 20 et 22. Cet empilement est à une autre extrémité en appui sur un épaulement 26 par l'intermédiaire d'un disque d'extrémité 22B solidaire axialement du support de roue 12 et du châssis de frein 25.

Les actionneurs agissent suivant une direction parallèle à l'axe de rotation de la roue.

Le dispositif de mesure d'usure 15 est propre à déterminer un paramètre représentatif de l'usure du frein et en l'espèce de la capacité énergétique du frein. La capacité énergétique est représentative de l'énergie pouvant encore être dissipée par le frein avant que les disques ne doivent être changés. Elle dépend du volume restant des organes de friction.

Le dispositif de mesure 15 comporte un capteur capacitif 40 et une unité de traitement d'information 42 reliée au capteur.

Le capteur capacitif 40 comporte deux armatures 44 identiques disposées en regard l'une de l'autre. Les armatures sont conductrices de l'électricité et sont recouvertes d'un isolant. Elles sont par exemple formées en métal. Les armatures sont supportées par le châssis 25 et sont immobilisées en position par rapport à celui-ci.

Les deux armatures sont dans le mode de réalisation illustré sur les figures 1 à 4 formées par des plaques cylindriques de section courbe disposées symétriquement par rapport à un axe longitudinal médian du capteur noté X-X. Cet axe s'étend parallèlement à l'axe de rotation de la roue.

La longueur des armatures 44 est supérieure au déplacement maximal autorisé du disque extrême 22A du fait de l'usure des organes de friction.

Un écran diélectrique 46, formé par exemple d'une tige cylindrique est monté coulissant entre les deux armatures 44. Il est formé par exemple en acier. Cet écran diélectrique est lié à une extrémité au disque extrême 22A.

L'écran s'étend suivant l'axe X-X parallèlement à l'axe de rotation de la roue, c'est-à-dire perpendiculairement au plan du disque 22A. Il est disposé à distance des armatures 44 et traverse le châssis 25 sans contact avec celui-ci.

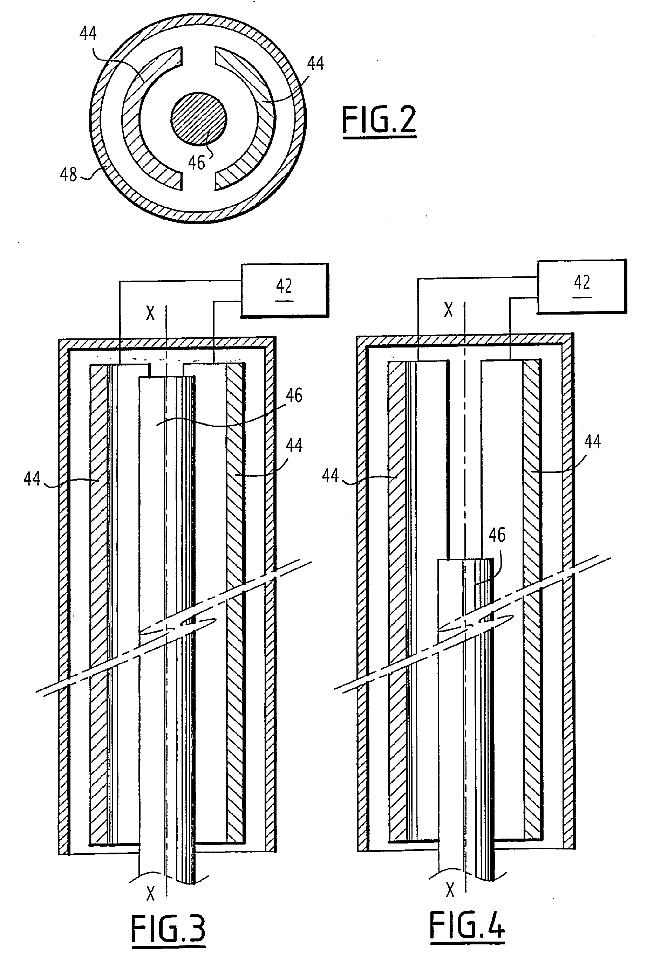

La longueur de l'écran est supérieure à la longueur des armatures 44. Il est déplaçable avec le disque extrême 22A entre une position d'engagement total entre les deux armatures 44 comme illustré sur la figure 3, et une position d'engagement seulement partielle entre les armatures comme illustré sur la figure 4.

La position d'engagement total, dans laquelle l'écran se trouve entre les armatures 44 suivant toute la longueur de celles-ci correspond à la position de l'écran alors que les organes de friction 20, 22 sont neufs. Au contraire, la position d'engagement seulement partiel de la figure 4 correspond au cas où les organes de friction 20, 22 sont partiellement ou totalement usés, de sorte que l'écran ne s'étend que partiellement entre les deux armatures lorsque le frein est serré.

Par ailleurs, le capteur 40 comporte un boîtier 48 de préférence métallique enveloppant complètement les armatures 44.

L'écran 46 est lié à la masse. Les armatures 44 sont reliées à deux bornes de l'unité de traitement d'informations 42.

Cette dernière comporte des moyens 50 connus en soi de mesure de la capacité du condensateur formé par les armatures 44. Ces moyens comportent par exemple un pont de WHEASTONE dans lequel est intégré le capteur capacitif, le pont étant alimenté comme connu en soi par un générateur adapté.

L'unité de traitement d'informations comporte en outre un calculateur 52 relié aux moyens de mesure 50 et propre à déduire l'épaisseur des disques à partir de la capacité établie entre les deux armatures 44 du capteur capacitif. Le calculateur 52 est en outre adapté pour déterminer la capacité énergétique du frein à partir des données dimensionnelles connues du frein et de l'épaisseur déduite des disques.

Comme connu en soi, le frein agit par serrage des organes de friction les uns contre les autres sous l'action des actionneurs 24. Alors que les organes de friction sont serrés, l'écran 46 se déplace entre les armatures 44 pour atteindre une position imposée en fonction de l'usure des disques. Dans cette position, l'écran 46 s'étend entre les armatures 44 seulement sur une partie de la longueur de celles-ci, les deux armatures 44 n'étant séparées que par de l'air au-delà de l'extrémité de l'écran 46.

Dans la mesure où la capacité du condensateur dépend de la perméabilité du matériau disposé entre les armatures, et que la perméabilité du matériau constituant l'écran 46 est différente et notamment très supérieure à la perméabilité de l'air, la position de la tige suivant la longueur des armatures détermine la capacité du condensateur. Cette capacité est directement liée à l'usure des freins, puisqu'elle dépend de la position de l'écran 46.

A partir de la valeur de la capacité du capteur capacitif 40, l'unité de traitement d'informations 42 détermine par calcul la capacité énergétique restante du frein.

Le recours à un capteur capacitif permet d'obtenir un dispositif de mesure d'usure qui soit simple et peu sensible à l'environnement perturbé du frein, notamment au niveau vibratoire et thermique.

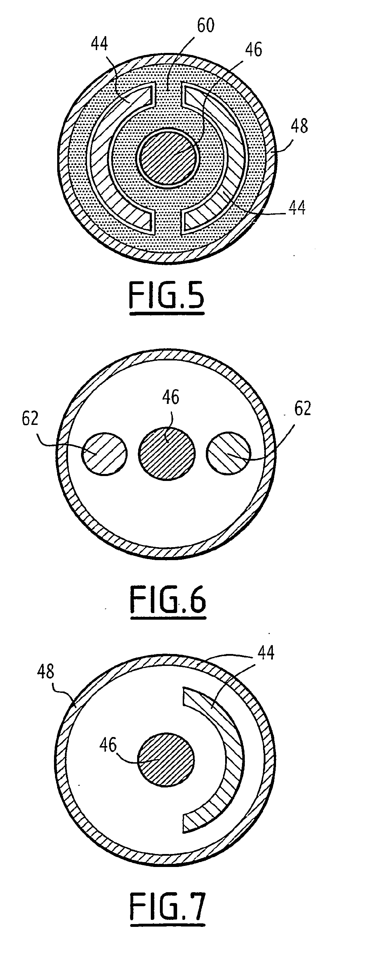

Avantageusement, et comme illustré sur la Figure 5, un insert de remplissage 60 est disposé entre les armatures 44, l'écran 46 et le boîtier 48 afin de former un guide mécanique pour le déplacement de l'écran. Cet insert de remplissage est formé d'un matériau électriquement isolant rigide dans lequel sont formés des conduits de réception de l'écran et des armatures. Le noyau assure en outre une retenue et un support mécanique des armatures 44.

Des variantes de réalisation du capteur sont illustrées sur les figures 6 et 7.

Dans le mode de réalisation de la figure 6, les armatures 44 sont formées non pas par des portions de cylindre mais par des tiges de section circulaire 62 diamétralement opposées par rapport à l'axe X-X de déplacement de l'écran 46.

Dans le mode de réalisation de la figure 7, une unique armature 44 est disposée à l'intérieur du boîtier 48. L'autre armature 44 du capteur capacitif est formée par le boîtier 48 lui-même qui est relié à l'unité de traitement d'information 42 pour former la deuxième armature. Dans ce mode de réalisation également, la tige 46 est montée déplaçable à l'intérieur de la cavité délimitée par le boîtier 48 et sépare les faces en regard de l'armature 44 et du boîtier 48.

L'usage d'un capteur capacitif dans cette application particulière s'avère beaucoup plus performante que l'usage d'un capteur de type LVDT (linear variable differential transformer).

## Revendications

1. Frein (14) pour une roue (10) de véhicule montée rotative par rapport à un support de roue (12), comportant un châssis (25) destiné à être solidaire du support de roue (12) et des organes de friction fixes et mobiles complémentaires (20, 22), les organes de friction mobiles (20) étant destinés à être solidaires de la roue (12) et les organes de friction fixes (22) étant solidaires en rotation du châssis (25), le frein comportant au moins un actionneur (24) porté par le châssis (25) et adapté pour presser les organes de friction complémentaires (20, 22) les uns contre les autres suivant l'axe de la roue, ainsi qu'un dispositif (15) de mesure d'un paramètre représentatif de la capacité énergétique du frein, **caractérisé en ce que** le dispositif de mesure (15) comporte un capteur capacitif (40) et une unité de traitement d'information (42) reliée au capteur capacitif (40), lequel capteur capacitif (40) comprend deux armatures de mesure (44) disposées en regard et portées par le châssis (25) et un écran diélectrique (46) porté par un organe de friction (20, 22), lequel écran diélectrique mobile sous l'action du ou de chaque actionneur (24) est coulissant entre les deux armatures (44) lors du serrage des organes de friction (20, 22) pour modifier la capacité du condensateur formé des deux armatures de mesure (44).

2. Frein selon la revendication 1, **caractérisé en ce que** les deux armatures (44) sont formées par des plaques cylindriques de section courbe généralement symétriques l'une de l'autre par rapport à un axe médian (X-X) suivant lequel l'écran diélectrique (46) est déplaçable.

3. Frein selon la revendication 1, **caractérisé en ce que** les deux armatures sont formées par des tiges (62) généralement symétriques l'une de l'autre par rapport à un axe médian suivant lequel l'écran diélectrique (46) est déplaçable.

4. Frein selon la revendication 1, **caractérisé en ce que** l'une des armatures (44) forme un boîtier (48) délimitant une cavité dans laquelle est reçu au moins partiellement l'écran diélectrique (46) et l'autre armature (44).

5. Frein selon l'une quelconque des revendications précédentes, **caractérisé en ce que** les armatures (44) s'étendent généralement parallèlement à la direction de serrage des organes de friction (20, 22).

6. Frein selon l'une quelconque des revendications précédentes, **caractérisé en ce que** l'écran diélectrique (46) a généralement la forme d'une tige s'étendant suivant l'axe de serrage des organes de friction (20, 22).

7. Frein selon l'une quelconque des revendications précédentes, **caractérisé en ce qu'**un insert isolant (60) est interposé entre les deux armatures (44) et l'écran diélectrique (46) pour le guidage mécanique de l'écran diélectrique (46).

8. Frein d'atterrissage d'avion comportant un support de roue (12), une roue (10) et un frein (14) selon l'une quelconque des revendications précédentes.

## Claims

1. A brake (14) for a vehicle wheel (10) mounted to rotate relative to a wheel support (12), the brake comprising a frame (25) for being secured to the wheel support (12), and complementary moving and stationary friction members (20, 22), the moving friction members (20) being for securing to the wheel (12), and the stationary friction members (22) being constrained in rotation with the frame (25), the brake including at least one actuator (24) carried by the frame (25) and adapted to press the complementary friction members (20, 22) against one another along the axis of the wheel, and also including a measurement device (15) for measuring a parameter representative of the energy capacity of the brake, **characterized in that** the measurement device (15) comprises a capacitive sensor (40) and an information processor unit (42) connected to the capacitive sensor (40), which capacitive sensor comprises two measurement plates (44) disposed facing each other and carried by the frame (25) and a dielectric screen (46) carried by a friction member (20, 22), which dielectric screen, moving under drive from the or each actuator (24), is slidable between the two plates (44) while the friction members (20, 22) are being pressed together, thereby changing the capacitance of the capacitor formed by the two measurement plates (44).

2. A brake according to claim 1, **characterized in that** the two plates (44) are formed by cylindrical plates of curved section that are generally symmetrical to each other about a middle axis (X-X) along which the dielectric screen (46) is movable.

3. A brake according to claim 1, **characterized in that** the two plates are formed by pins (62) that are generally symmetrical to each other about a middle axis along which the dielectric screen (46) is movable.

4. A brake according to claim 1, **characterized in that** one of the plates (44) forms a housing (48) defining a cavity in which there are received at least part of the dielectric screen (46) and the other plate (44).

5. A brake according to claim 1, **characterized in that** the plates (44) extend generally parallel to the direction in which the friction members (20, 22) are pressed together.

6. A brake according to claim 1, **characterized in that** the dielectric screen (46) is generally in the form of a pin extending along the axis along which the friction members (20, 22) are pressed together.

7. A brake according to claim 1, **characterized in that** an insulating insert (60) is interposed between the two plates (44) and the dielectric screen (46) to provide the dielectric screen (46) with mechanical guidance.

8. An airplane landing brake comprising a wheel support (12), a wheel (10), and a brake (14) according to anyone of the preceding claims.

## Patentansprüche

1. Bremse (14) für ein Fahrzeugrad (10), die bezüglich eines Radlagers (12) drehbar montiert ist, umfassend ein Chassis (25), das dazu bestimmt ist, mit dem Radlager (12) fest verbunden zu sein, und feststehende und bewegliche komplementäre Friktionselemente (20, 22), wobei die beweglichen Friktionselemente (20) dazu bestimmt sind, mit dem Rad (12) fest verbunden zu sein, und die feststehenden Friktionselemente (22) dazu bestimmt sind, sich fest verbunden mit dem Chassis (25) zu drehen, wobei die Bremse mindestens einen Betätiger (24) umfasst, der von dem Chassis (25) getragen wird und dazu geeignet ist, die komplementären Friktionselemente (20, 22) unmittelbar im Anschluss an die Radachse gegeneinander zu drücken, sowie eine Meßvorrichtung (15) für einen repräsentativen Parameter des Energie-Aufnahmevermögens der Bremse, **dadurch gekennzeichnet, dass** die Meßvorrichtung (15) einen kapazitiven Sensor (40) und eine Informationsprozessoreinheit (42) umfasst, die mit dem kapazitiven Sensor (40) verbunden ist, wobei der kapazitive Sensor (40) zwei Messbeläge (44), die gegenüber angeordnet sind und von dem Chassis (25) getragen werden, und eine dielektrische Abschirmung (46), die von einem Friktionselement (20, 22) getragen wird, umfasst, wobei die bewegliche dielektrische Abschirmung unter der Wirkung des oder eines jeden Betätigers (24) zwischen den beiden Belägen (44) während des Anziehens der Friktionselemente (20, 22) verschiebbar ist, um die Kapazität des von den zwei Meßbelägen (44) gebildeten Kondensators zu modifizieren.

2. Bremse nach Anspruch 1, **dadurch gekennzeichnet, dass** die beiden Beläge (44) aus zylindrischen Platten von gekrümmtem Querschnitt gebildet sind, die im Allgemeinen zueinander bezüglich einer Mittelachse (X-X), entlang welcher die kapazitive Abschirmung (46) verschiebbar ist, symmetrisch sind.

3. Bremse nach Anspruch 1, **dadurch gekennzeichnet, dass** die beiden Beläge von zwei Schäften (62) gebildet werden, die im Allgemeinen zueinander bezüglich einer Mittelachse, entlang welcher die kapazitive Abschirmung (46) verschiebbar ist, symmetrisch sind.

4. Bremse nach Anspruch 1, **dadurch gekennzeichnet, dass** einer der Beläge (44) ein Gehäuse (48) bildet, das einen Hohlraum begrenzt, in dem die kapazitive Abschirmung (46) und der andere Belag (44) mindestens zum Teil aufgenommen werden.

5. Bremse nach einem der vorhergehenden Ansprüche, **dadurch gekennzeichnet, dass** die Beläge (44) sich im Allgemeinen parallel zu der Zugrichtung der Friktionselemente (20, 22) erstrecken.

6. Bremse nach einem der vorhergehenden Ansprüche, **dadurch gekennzeichnet, dass** die dielektrische Abschirmung (46) im Allgemeinen die Form eines Schafts aufweist, der sich unmittelbar im Anschluss an eine Zugachse der Friktionselemente (20, 22) erstreckt.

7. Bremse nach einem der vorhergehenden Ansprüche, **dadurch gekennzeichnet, dass** ein isolierender Einsatz (60) zwischen den beiden Belägen (44) und der dielektrischen Abschirmung (46) zur mechanischen Führung der dielektrischen Abschirmung (46) angeordnet ist.

8. Flugzeug-Landungsbremse umfassend einen Radträger (12), ein Rad (10) und eine Bremse (14) nach einem der vorhergehenden Ansprüche.
